# EUROPEAN PATENT APPLICATION

(11) **EP 4 385 711 A1**
(43) Date of publication of application: **19.06.2024**
(21) Application number: 23177576.8
(22) Date of filing: 06.06.2023
(51) Int. Cl.: B29C 64/124, B29C 64/386, B29C 64/236, B33Y 10/00, B33Y 30/00, B33Y 50/00

(54) **TILE OPTIMIZATION**

(30) Priority: 12.12.2022 WO PCT/US2022/052497
(71) Applicant: Nano-Dimension Technologies, Ltd., 74036 Nes Ziona (IL)
(72) Inventor: WEIDMAN, Ran, 7403422 New Ziona (IL); PELEG, Ran, Cremerone, 2090 (AU); SHELEF, Eyal Haim, 6801265 Tel Aviv (IL); DONNER, Jon, 4029700 Mikhmoret (IL); LEYZEROVITCH, Hotam, 6676250 Tel Aviv (IL); GREEN, Assaf, 6249237 Tel Aviv (IL); COHEN, Idan, 5800708 Azur (IL)
(74) Representative: ip21 Ltd

(57) **Abstract**

A three-dimensional (3D) printing system and method for printing a 3D model by determining a projection trajectory for each cross-sectional layer of the 3D model being printed such that a projector capable of operating according to the projection trajectory can print a given pattern associated with each of the cross-sectional layers of the 3D model without having to travel along the entire surface of the given cross-sectional layer.

## Description

### TECHNICAL FIELD

The invention is directed to the field of three-dimensional (3D) printing.

3D printing techniques (otherwise known as additive manufacturing, rapid prototyping, or layered manufacturing) enable the fabrication of customized/complex objects without the need for molds or machining. The strategy behind the 3D printing techniques (also known as 3D photopolymerization) is based on using monomers/oligomers in a liquid state that can be cured/photopolymerized upon exposure to light source of specific wavelengths.

Stereolithography is one of several technologies used to create 3D models. These technologies differ mainly by the light source they use. Digital Light Processing (DLP) is one variant of SLA (Stereolithographic Apparatus) known in the art.

Typically, DLP printers, which may either have a bottom-up or top-down orientation, print a 3D model by dividing it into a plurality of horizontal layers, analyzing the pattern required to be printed for each horizontal layer, and projecting the pattern onto a liquid photosensitive material (e.g., photopolymer), which causes a photopolymerization thereof (i.e., the liquid photosensitive material solidifies) under the projected light. The horizontal layers are formed on a building platform, which changes its position with the completion of each horizontal layer, exposing a new surface layer of liquid photosensitive material to be photopolymerized.

During the printing process of each of the plurality of horizontal layers, the given horizontal layer is divided into a plurality of overlay regions, such that each of the plurality of overlay regions is an area, which a projector of the DLP printer is capable of projecting in a single emission of light. Of the plurality of overlay regions, one or more overlay regions may include one or more pixels that are part of a plurality of pixels assembling the pattern directed to be printed on the given horizontal layer.

Following the division of the given horizontal layer into a plurality of overlay regions, the projector of the DLP printer travels from one overlay region to another according to a default trajectory involving passage along the entire plurality of regions of the given horizontal layer without considering the positioning of the one or more overlay regions possessing the one or more pixels that are part of the plurality of pixels assembling the pattern associated with the given horizontal layer.

This approach is energy- and time-consuming. Thus, there is a need for a new system and method for three-dimensional (3D) printing.

### GENERAL DESCRIPTION

In accordance with a first aspect of the presently disclosed subject matter, there is provided a three-dimensional (3D) printing system comprising: a movable projector capable of moving on a two-dimensional (2D) plane; a container capable of containing a photosensitive liquid material directed to solidify in response to an encounter with an emitted light generated by the moveable projector; a building platform directed to be movable perpendicularly to the 2D plane within the container; and, a processing circuitry configured to: obtain a 3D model for printing; divide the 3D model into a plurality of horizontal layers, wherein: (a) at least one of the plurality of horizontal layers includes one or more clusters, and (b) each of the one or more clusters is a closed geometric shape consisting of a plurality of pixels; for each given horizontal layer of the at least one of the plurality of horizontal layers, perform the following: detect the one or more clusters within the given horizontal layer; categorize each of the one or more clusters according to a predefined set of cluster-related categories, giving rise to one or more categorized clusters; for at least one of the one or more categorized clusters perform the following: determine an overlay bounding zone configured to contain the at least one given categorized cluster; divide at least an area of the overlay bounding zone consisting the at least one given categorized cluster into one or more overlay regions arranged in one or more overlay rows such that at least some of the one or more overlay regions include at least a portion of the at least one given categorized cluster and each overlay region of the plurality of overlay regions is an area which the movable projector is capable of projecting in a single emission of light; shift at least one overlay row of the one or more overlay rows, if necessary, such that at least a portion of at least one segment of a first overlay region of each of the at least one overlay row is found to be at a predetermined distance from at least a portion of the at least one given categorized cluster; and, remove overlay regions of the one or more regions that do not contain at least a portion of the at least one given categorized cluster; determine from the remaining overlay regions of the one or more overlay regions of each of the at least an area of the overlay bounding zone consisting the at least one given categorized cluster a projection trajectory for the movable projector to operate accordingly in order to fully print the one or more categorized clusters; operate the movable projector according to the projection trajectory, such that the moveable projector emits light on each overlay region associated with the projection trajectory; and, with the completion of the projection trajectory on the given horizontal layer, move the building platform to enable printing of a subsequent horizontal layer of the plurality of horizontal layers.

In some cases, the step of removing overlay regions that do not contain at least a portion of the at least one given categorized cluster give rise to one or more overlay sub-rows consisting of one or more of the remaining overlay regions, and wherein the system is further configured to: shift at least one overlay sub-row of the one or more overlay sub-rows, if necessary, such that at least a portion of at least one segment of a first overlay region of each of the one or more overlay sub-rows is found to be at a predetermined distance from at least a portion of the at least one given categorized cluster; and, remove overlay regions of the one or more remaining overlay regions that do not contain at least a portion of the at least one given categorized cluster.

In some cases, the determination of the projection pattern is preformed based on an algorithm directed for solving the Travelling Salesman Problem.

In some cases, the area of the overlay bounding zone consisting the at least one given categorized cluster includes overlay regions that do not need to be projected in order to fully print the cluster.

In some cases, the detection of the one or more clusters involves determining a positioning of a given cluster of the one or more clusters within the given horizontal layer.

In some cases, the categorization of the one or more clusters involves at least one of: (a) determining whether the given cluster of the one or more clusters fully matches the size of an overlay region or is fully fitted within an overlay region, and (b) determining whether at least one cluster of the one or more other clusters, excluding the given cluster, is located at a distance that is less than an overlay region's length or an overlay region's width from the given cluster.

In some cases, at least one cluster of the one or more clusters is considered to be a "fit and lonely" cluster if: (a) the at least one cluster is fully fitted within an overlay region of the plurality of overlay regions of the at least an area of the overlay bounding zone consisting the given categorized cluster, and (b) there are no other clusters of the one or more other clusters located at a distance that is less than an overlay region's length or an overlay region's width from the at least one cluster.

In some cases, the "fit and lonely" cluster is fully printed using a single region projection of the overlay region of the plurality of overlay regions containing the "fit and lonely" cluster.

In some cases, at least one cluster of the one or more clusters is considered to be a "fit with neighbors" cluster if: (a) the at least one cluster is fully fitted within an overlay region of the plurality of overlay regions of the at least an area of the overlay bounding zone consisting the given categorized cluster, and (b) at least one cluster of the one or more other clusters is located at a distance that is less than an overlay region's length or an overlay region's width from the at least one cluster.

In some cases, the "fit with neighbors" cluster is appended to be within the same overlay region of the plurality of overlay regions as another cluster of the one or more other clusters located at a distance that is less than an overlay region's length or an overlay region's width from the at least one cluster.

In some cases, the "fit with neighbors" cluster and the another cluster of the one or more clusters located at a distance that is less than an overlay region's length or an overlay region's width from the at least one cluster are printed using a single region projection of the overlay region of the plurality of overlay regions containing both the "fit and lonely" cluster and the another cluster.

In some cases, at least one cluster of the one or more clusters is considered to be a "fit and rare" cluster if the at least one cluster is fully fitted and fully matches the size of an overlay region of the plurality of overlay regions of the at least an area of the overlay bounding zone consisting the given categorized cluster.

In some cases, the "fit and rare" cluster is printed using a single region projection of the overlay region of the plurality of overlay regions containing the "fit and rare" cluster.

In some cases, at least one cluster of the one or more clusters is considered to be a "big and lonely" cluster if: (a) the at least one cluster fully matches the size of an overlay region of the plurality of overlay regions of the at least an area of the overlay bounding zone consisting the given categorized cluster, (b) the at least one cluster is not fully fitted within the overlay region, and (c) there are no other clusters of the one or more other clusters located at a distance that is less than an overlay region's length or an overlay region's width from the at least one cluster.

In some cases, the "big and lonely" cluster is fully printed by dividing the "big and lonely" to a plurality of overlay regions and projecting each of the plurality of overlay regions using a single region projection.

In some cases, at least one cluster of the one or more clusters is considered to be a "big with neighbors" cluster if: (a) the at least one cluster fully matches the size of an overlay region of the plurality of overlay regions of the at least an area of the overlay bounding zone consisting the given categorized cluster, (b) the at least one cluster is not fully fitted within the overlay region, and (c) there are clusters of the one or more other clusters located at a distance that is less than an overlay region's length or an overlay region's width from the at least one cluster.

In some cases, at least a portion of the "big with neighbors" cluster is appended to the same overlay region of the plurality of overlay regions as another cluster of the one or more other clusters located at a distance that is less than an overlay region's length or an overlay region's width from the at least one cluster.

In some cases, the at least a portion of the "big with neighbors" cluster and the another cluster of the one or more other clusters located at a distance that is less than an overlay region's length or an overlay region's width from the at least one cluster are printed using a single region projection of the overlay region of the plurality of overlay regions containing both the at least a portion of the "big with neighbors" cluster and the another cluster.

In some cases, the projector is a Digital Light Processing (DLP) projector.

In some cases, the projector is a laser.

In accordance with a second aspect of the presently disclosed subject matter, there is provided a method for three-dimensional (3D) printing comprising: obtaining a 3D model for printing; dividing the 3D model into a plurality of horizontal layers, wherein: (a) at least one of the plurality of horizontal layers includes one or more clusters, and (b) each of the one or more clusters is a closed geometric shape consisting of a plurality of pixels; for each given horizontal layer of the at least one of the plurality of horizontal layers, performing the following: detecting the one or more clusters within the given horizontal layer; categorizing each of the one or more clusters according to a predefined set of cluster-related categories, giving rise to one or more categorized clusters; for at least one of the one or more categorized clusters performing the following: determining an overlay bounding zone configured to contain the at least one given categorized cluster; dividing at least an area of the overlay bounding zone consisting the at least one given categorized cluster into one or more overlay regions arranged in one or more overlay rows such that at least some of the one or more overlay regions include at least a portion of the at least one given categorized cluster and each overlay region of the plurality of overlay regions is an area which the movable projector is capable of projecting in a single emission of light; shifting at least one overlay row of the one or more overlay rows, if necessary, such that at least a portion of at least one segment of a first overlay region of each of the at least one overlay row is found to be at a predetermined distance from at least a portion of the at least one given categorized cluster; and, removing overlay regions of the one or more regions that do not contain at least a portion of the at least one given categorized cluster; determining from the remaining overlay regions of the one or more overlay regions of each of the at least an area of the overlay bounding zone consisting the at least one given categorized cluster a projection trajectory for the movable projector to operate accordingly in order to fully print the one or more categorized clusters; operating the movable projector according to the projection trajectory, such that the moveable projector emits light on each overlay region associated with the projection trajectory; and, with the completion of the projection trajectory on the given horizontal layer, moving the building platform to enable printing of a subsequent horizontal layer of the plurality of horizontal layers.

In some cases, the step of removing overlay regions that do not contain at least a portion of the at least one given categorized cluster give rise to one or more overlay sub-rows consisting of one or more of the remaining overlay regions, and wherein the method is further configured to: shifting at least one overlay sub-row of the one or more overlay sub-rows, if necessary, such that at least a portion of at least one segment of a first overlay region of each of the one or more overlay sub-rows is found to be at a predetermined distance from at least a portion of the at least one given categorized cluster; and, removing overlay regions of the one or more remaining overlay regions that do not contain at least a portion of the at least one given categorized cluster.

In some cases, the determination of the projection pattern is preformed based on an algorithm directed for solving the Travelling Salesman Problem (TSP).

In some cases, the area of the overlay bounding zone consisting the at least one given categorized cluster includes overlay regions that do not need to be projected in order to fully print the cluster.

In some cases, the detection of the one or more clusters involves determining a positioning of a given cluster of the one or more clusters within the given horizontal layer.

In some cases, the categorization of the one or more clusters involves at least one of: (a) determining whether the given cluster of the one or more clusters fully matches the size of an overlay region or is fully fitted within an overlay region, and (b) determining whether at least one cluster of the one or more other clusters, excluding the given cluster, is located at a distance that is less than an overlay region's length or an overlay region's width from the given cluster.

In some cases, at least one cluster of the one or more clusters is considered to be a "fit and lonely" cluster if: (a) the at least one cluster is fully fitted within an overlay region of the plurality of overlay regions of the at least an area of the overlay bounding zone consisting the given categorized cluster, and (b) there are no other clusters of the one or more other clusters located at a distance that is less than an overlay region's length or an overlay region's width from the at least one cluster.

In some cases, the "fit and lonely" cluster is fully printed using a single region projection of the overlay region of the plurality of overlay regions containing the "fit and lonely" cluster.

In some cases, at least one cluster of the one or more clusters is considered to be a "fit with neighbors" cluster if: (a) the at least one cluster is fully fitted within an overlay region of the plurality of overlay regions of the at least an area of the overlay bounding zone consisting the given categorized cluster, and (b) at least one cluster of the one or more other clusters is located at a distance that is less than an overlay region's length or an overlay region's width from the at least one cluster.

In some cases, the "fit with neighbors" cluster is appended to be within the same overlay region of the plurality of overlay regions as another cluster of the one or more other clusters located at a distance that is less than an overlay region's length or an overlay region's width from the at least one cluster.

In some cases, the "fit with neighbors" cluster and the another cluster of the one or more clusters located at a distance that is less than an overlay region's length or an overlay region's width from the at least one cluster are printed using a single region projection of the overlay region of the plurality of overlay regions containing both the "fit and lonely" cluster and the another cluster.

In some cases, at least one cluster of the one or more clusters is considered to be a "fit and rare" cluster if the at least one cluster is fully fitted and fully matches the size of an overlay region of the plurality of overlay regions of the at least an area of the overlay bounding zone consisting the given categorized cluster.

In some cases, the "fit and rare" cluster is printed using a single region projection of the overlay region of the plurality of overlay regions containing the "fit and rare" cluster.

In some cases, at least one cluster of the one or more clusters is considered to be a "big and lonely" cluster if: (a) the at least one cluster fully matches the size of an overlay region of the plurality of overlay regions of the at least an area of the overlay bounding zone consisting the given categorized cluster, (b) the at least one cluster is not fully fitted within the overlay region, and (c) there are no other clusters of the one or more other clusters located at a distance that is less than an overlay region's length or an overlay region's width from the at least one cluster.

In some cases, the "big and lonely" cluster is fully printed by dividing the "big and lonely" to a plurality of overlay regions and projecting each of the plurality of overlay regions using a single region projection.

In some cases, at least one cluster of the one or more clusters is considered to be a "big with neighbors" cluster if: (a) the at least one cluster fully matches the size of an overlay region of the plurality of overlay regions of the at least an area of the overlay bounding zone consisting the given categorized cluster, (b) the at least one cluster is not fully fitted within the overlay region, and (c) there are clusters of the one or more other clusters located at a distance that is less than an overlay region's length or an overlay region's width from the at least one cluster.

In some cases, at least a portion of the "big with neighbors" cluster is appended to the same overlay region of the plurality of overlay regions as another cluster of the one or more other clusters located at a distance that is less than an overlay region's length or an overlay region's width from the at least one cluster.

In some cases, the at least a portion of the "big with neighbors" cluster and the another cluster of the one or more other clusters located at a distance that is less than an overlay region's length or an overlay region's width from the at least one cluster are printed using a single region projection of the overlay region of the plurality of overlay regions containing both the at least a portion of the "big with neighbors" cluster and the another cluster.

In some cases, the projector is a Digital Light Processing (DLP) projector.

In some cases, the projector is a laser.

In accordance with a third aspect of the presently disclosed subject matter, there is provided a non-transitory computer readable storage medium having computer readable program code embodied therewith, the computer readable program code, executable by at least one processor to perform a method for three-dimensional (3D) printing, the three-dimensional (3D) printing comprising one or more components, the method comprising: obtaining a 3D model for printing; dividing the 3D model into a plurality of horizontal layers, wherein: (a) at least one of the plurality of horizontal layers includes one or more clusters, and (b) each of the one or more clusters is a closed geometric shape consisting of a plurality of pixels; for each given horizontal layer of the at least one of the plurality of horizontal layers, performing the following: detecting the one or more clusters within the given horizontal layer; categorizing each of the one or more clusters according to a predefined set of cluster-related categories, giving rise to one or more categorized clusters; for at least one of the one or more categorized clusters performing the following: determining an overlay bounding zone configured to contain the at least one given categorized cluster; dividing at least an area of the overlay bounding zone consisting the at least one given categorized cluster into one or more overlay regions arranged in one or more overlay rows such that at least some of the one or more overlay regions include at least a portion of the at least one given categorized cluster and each overlay region of the plurality of overlay regions is an area which the movable projector is capable of projecting in a single emission of light; shifting at least one overlay row of the one or more overlay rows, if necessary, such that at least a portion of at least one segment of a first overlay region of each of the at least one overlay row is found to be at a predetermined distance from at least a portion of the at least one given categorized cluster; and, removing overlay regions of the one or more regions that do not contain at least a portion of the at least one given categorized cluster; determining from the remaining overlay regions of the one or more overlay regions of each of the at least an area of the overlay bounding zone consisting the at least one given categorized cluster a projection trajectory for the movable projector to operate accordingly in order to fully print the one or more categorized clusters; operating the movable projector according to the projection trajectory, such that the moveable projector emits light on each overlay region associated with the projection trajectory; and, with the completion of the projection trajectory on the given horizontal layer, moving the building platform to enable printing of a subsequent horizontal layer of the plurality of horizontal layers.

### BRIEF DESCRIPTION OF THE DRAWINGS

In order to understand the presently disclosed subject matter and to see how it may be carried out in practice, the subject matter will now be described, by way of non-limiting examples only, with reference to the accompanying drawings, in which:
**Fig. 1** is a schematic illustration of a system for three-dimensional (3D) printing, in accordance with the presently disclosed subject matter;
**Fig. 2** is a flowchart illustrating one example of a sequence of operations carried out for three-dimensional (3D) printing, in accordance with the presently disclosed subject matter;
**Fig. 3A** is a schematic illustration of a horizontal layer of a 3D model being printed by the system for three-dimensional (3D) printing of Fig. 1, in accordance with the presently disclosed subject matter;
**Figs. 3B-1 to 3D-1** are schematic illustrations of different clusters found on the horizontal layer of Fig. 3A, each contained by a respective bounding zone, in accordance with the presently disclosed subject matter;

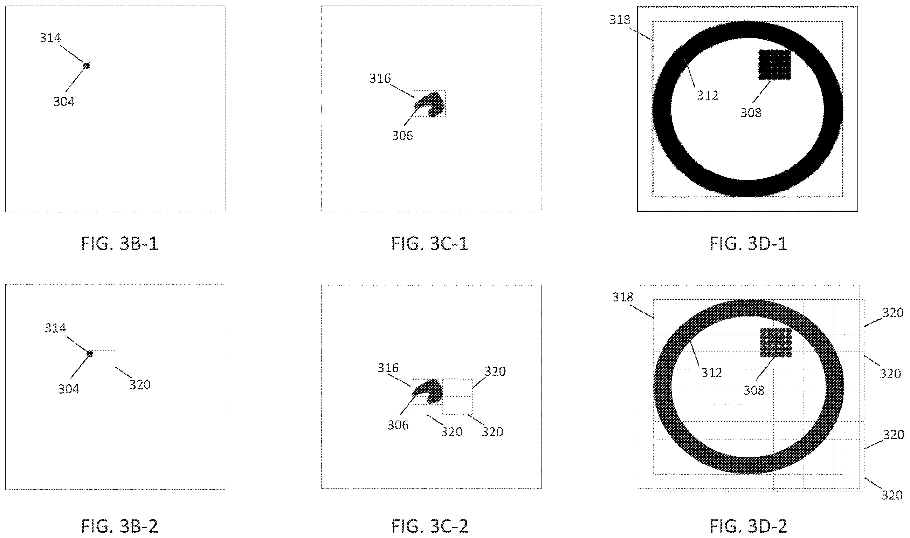

**Figs. 3B-2 to 3D-2** are schematic illustrations of the respective bounding zones illustrated in Figs. 3B-1 to 3D-1, respectively, divided into one or more overly regions arranged in one or more rows, in accordance with the presently disclosed subject matter;

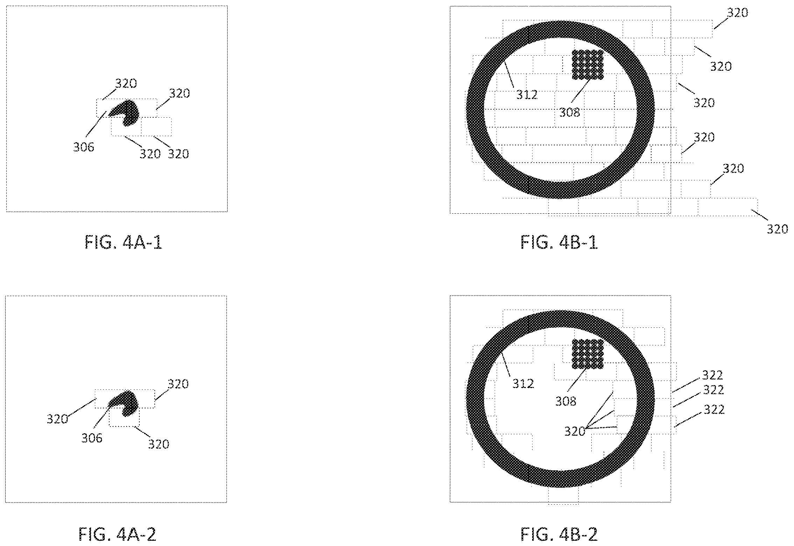

**Figs. 4A-1 and 4B-1** are schematic illustrations of the one or more rows of the one or more overly regions presented in Figs. 3C-2 and 3D-2, respectively, shifted, in accordance with the presently disclosed subject matter;
**Figs. 4A-2** and **4B-2** are schematic illustrations of the one or more rows of the one or more overly regions presented in Figs. 4A-1 and 4B-1, respectively, in which overly regions not containing at least a portion of a cluster have been removed, in accordance with the presently disclosed subject matter;
**Figs. 4C-1** and **4C-2** are schematic illustrations of the one or more rows of the one or more overly regions presented in Fig. 4B-2, in which the one or more rows have been shifted and overly regions not containing at least a portion of a cluster have been removed, in accordance with the presently disclosed subject matter;

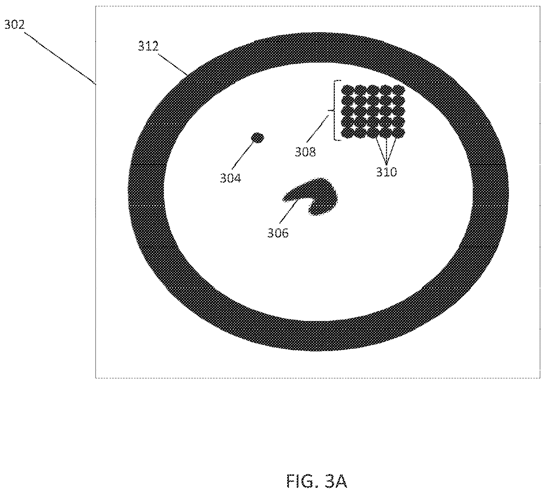

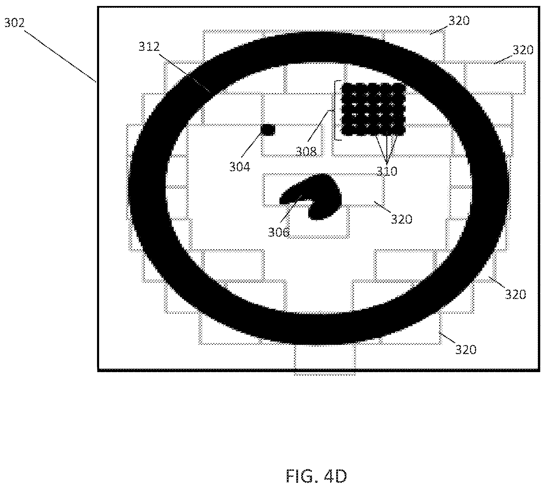

**Fig. 4D** is a schematic illustration of a determined projection trajectory for the moveable projector to operate accordingly in order to print the different clusters illustrated in Fig. 3A, in accordance with the presently disclosed subject matter; and,

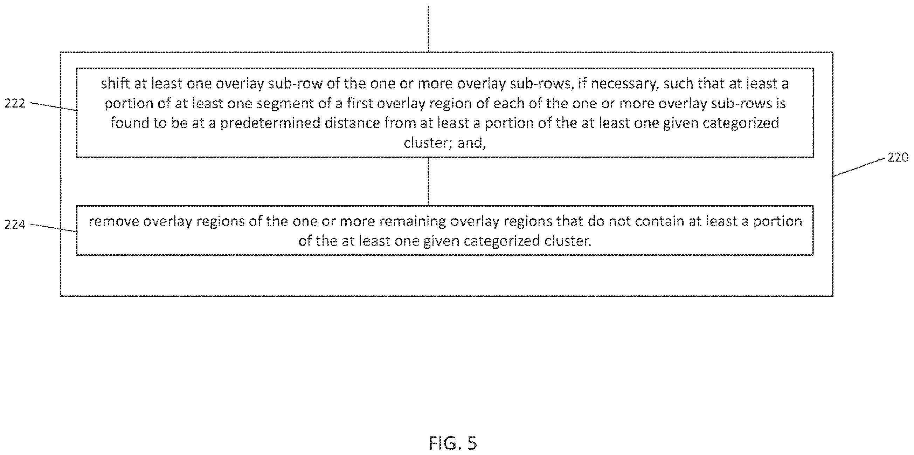

**Fig. 5** is a flowchart illustrating another example of a sequence of operations carried out for three-dimensional (3D) printing, in accordance with the presently disclosed subject matter.

### DETAILED DESCRIPTION

In the following detailed description, numerous specific details are set forth in order to provide a thorough understanding of the presently disclosed subject matter. However, it will be understood by those skilled in the art that the presently disclosed subject matter may be practiced without these specific details. In other instances, well-known methods, procedures, and components have not been described in detail so as not to obscure the presently disclosed subject matter.

In the drawings and descriptions set forth, identical reference numerals indicate those components that are common to different embodiments or configurations.

Unless specifically stated otherwise, as apparent from the following discussions, it is appreciated that throughout the specification discussions utilizing terms such as "obtaining", "dividing", "performing", "detecting", "categorizing", "determining", "shifting", "removing", "operating", or the like, include action and/or processes of a computer that manipulate and/or transform data into other data, said data represented as physical quantities, e.g., such as electronic quantities, and/or said data representing the physical objects. The terms "computer", "processor", "processing resource", "processing circuitry" and "controller" should be expansively construed to cover any kind of electronic device with data processing capabilities, including, by way of non-limiting example, a personal desktop/laptop computer, a server, a computing system, a communication device, a smartphone, a tablet computer, a smart television, a processor (e.g., digital signal processor (DSP), a microcontroller, a field programmable gate array (FPGA), an application specific integrated circuit (ASIC), etc.), a group of multiple physical machines sharing performance of various tasks, virtual servers co-residing on a single physical machine, any other electronic computing device, and/or any combination thereof.

The operations in accordance with the teachings herein may be performed by a computer specially constructed for the desired purposes or by a general-purpose computer specially configured for the desired purpose by a computer program stored in a non-transitory computer readable storage medium. The term "non-transitory" is used herein to exclude transitory, propagating signals, but to otherwise include any volatile or non-volatile computer memory technology suitable to the application.

As used herein, the phrase "for example," "such as", "for instance" and variants thereof describe non-limiting embodiments of the presently disclosed subject matter. Reference in the specification to "one case", "some cases", "other cases" or variants thereof means that a particular feature, structure or characteristic described in connection with the embodiment(s) is included in at least one embodiment of the presently disclosed subject matter. Thus, the appearance of the phrase "one case", "some cases", "other cases" or variants thereof does not necessarily refer to the same embodiment(s).

It is appreciated that, unless specifically stated otherwise, certain features of the presently disclosed subject matter, which are, for clarity, described in the context of separate embodiments, may also be provided in combination in a single embodiment. Conversely, various features of the presently disclosed subject matter, which are, for brevity, described in the context of a single embodiment, may also be provided separately or in any suitable sub-combination.

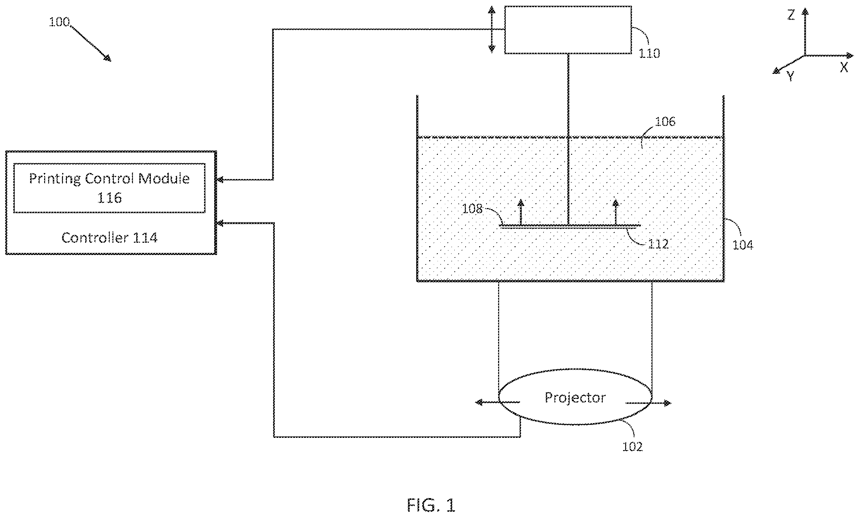

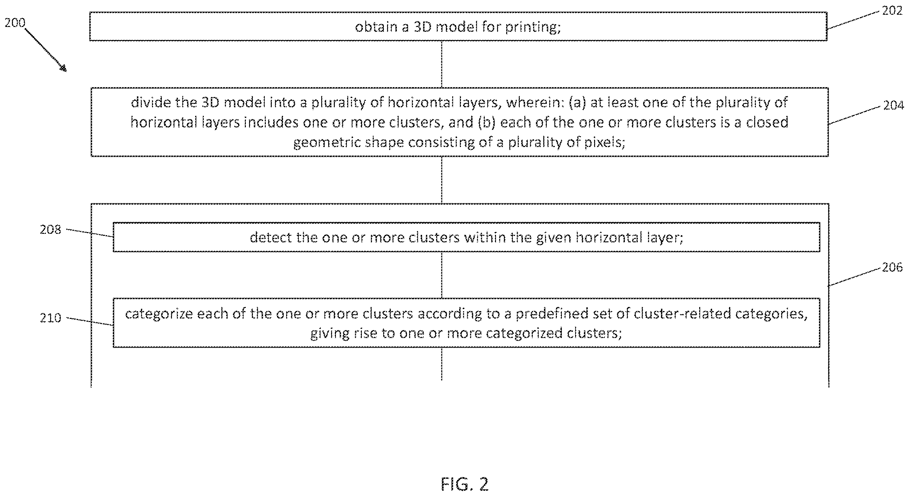

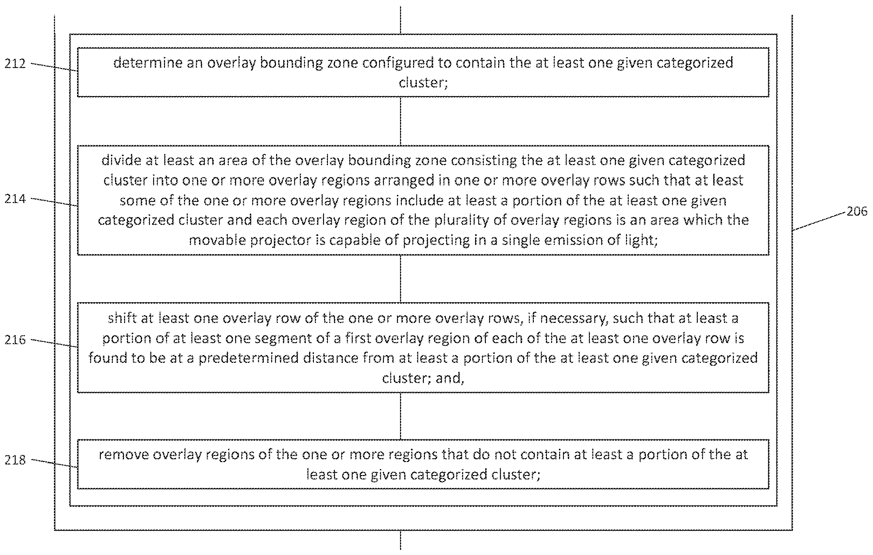

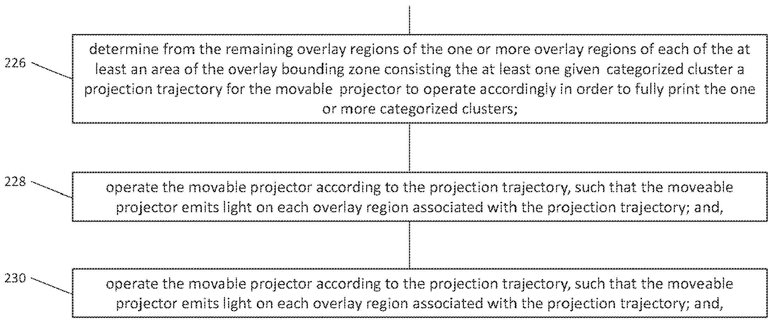

In embodiments of the presently disclosed subject matter, fewer, more and/or different stages than those shown in **Figs. 2** **and** **5** may be executed. In embodiments of the presently disclosed subject matter one or more stages illustrated in **Figs. 2** **and** **5** may be executed in a different order and/or one or more groups of stages may be executed simultaneously. **Fig. 1** illustrate a general schematic of the system architecture in accordance with an embodiment of the presently disclosed subject matter. Each module in **Fig. 1** can be made up of any combination of software, hardware and/or firmware that performs the functions as defined and explained herein. The modules in **Fig. 1** may be centralized in one location or dispersed over more than one location. In other embodiments of the presently disclosed subject matter, the system may comprise fewer, more, and/or different modules than those shown in **Fig. 1****.**

Any reference in the specification to a method should be applied mutatis mutandis to a system capable of executing the method and should be applied mutatis mutandis to a non-transitory computer readable medium that stores instructions that once executed by a computer result in the execution of the method.

Any reference in the specification to a system should be applied mutatis mutandis to a method that may be executed by the system and should be applied mutatis mutandis to a non-transitory computer readable medium that stores instructions that may be executed by the system.

Any reference in the specification to a non-transitory computer readable medium should be applied mutatis mutandis to a system capable of executing the instructions stored on the non-transitory computer readable medium, which should be applied mutatis mutandis to method that may be executed by a computer that reads the instructions stored on the non-transitory computer readable medium.

Bearing this in mind, attention is drawn to **Fig. 1****,** showing a schematic illustration of one example of a system for three-dimensional (3D) printing, in accordance with the presently disclosed subject matter.

As shown in the illustration, the system for three-dimensional (3D) printing 100 (also referred to herein as "system 100") includes a moveable projector 102, a container 104 containing a photosensitive liquid material 106, a building platform 108 connected to a motor 110, and at least one controller 114.

The system 100 may have a bottom-up orientation in which the moveable projector 102 (e.g., a Digital Light Processing (DLP) projector, a laser projector, and the like), capable of performing horizontal movement on X-Y plane (i.e., a two-dimensional (2D) plane), is placed beneath the container 104, and the motor 110, capable of performing vertical movement along a Z-axis, is placed above the container 104. In this orientation, in accordance with the location of the motor 110, the building platform 108 is immersed within the photosensitive liquid material 106 from above, accommodated by the container 104. The positioning of the building platform 108 within the photosensitive liquid material 106 may create a gap between the building platform 108 and the bottom surface of the container 104, allowing a desired thickness of a layer of the photosensitive liquid material 106 to flow therebetween. During a printing process of a 3D model, as further detailed herein with respect to Figs. 2 and 5, this desired thickness of photosensitive liquid material 106, which can be modified by moving the building platform 108, using the motor 110, is exposed to the moveable projector 102 which project a beam of electromagnetic radiation (e.g., invisible or ultraviolet spectrum) on the exposed layer of the photosensitive material 106, causing photopolymerization (i.e., solidification) of the layer. After the photopolymerization of the exposed layer, the motor 110 is configured to elevate the building platform 108 according to the layer thickness, enabling additional photosensitive liquid material 106 to flow underneath the solidified layer. This process is repeated until the desired object is complete.

The moveable projector 102, the building platform 108, and the motor 110 may be in communication with the at least one controller 114 such that the controller 114 can control the vertical movement of the motor 110 (and through the motor's 100 connection to the building platform 108 also the vertical movement of the building platform 108 (e.g., sequential and/or controlled shift of the movable stage 108 along Z-axis)), and the horizontal movement of the moveable projector 102. The at least one controller 114 can be one or more processing units (e.g., central processing units), microprocessors, microcontrollers, or any other computing devices or modules, including multiple and/or parallel and/or distributed processing units, which are adapted to independently or cooperatively process data for controlling relevant resources of the system for three-dimensional (3D) printing 100 and for enabling operations related to resources thereof. The at least one controller 114 may be in communication with a network interface device and a memory (both not shown), and can include a printing control module 116 configured to perform a process for three-dimensional (3D) printing, as further detailed herein with respect to Figs. 2 and 5.

It is to be noted that the memory may include a machine-accessible storage medium (or more specifically, a computer-readable storage medium) on which stored one or more sets of instructions (e.g., software) embodying any one or more of the methodologies or functions described herein. The software may also reside, completely or at least partially, within the memory and/or the at least one controller 114 during execution thereof by the system 100. The software may further be transmitted or received over a network via the network interface device.

It is to be noted that the term "machine -readable storage medium" should be taken to include a single medium or multiple media (e.g., centralized or distributed database, and/or associated caches and servers) that store the one or more sets of instructions. The term "machine-readable storage medium" shall also be taken to include any medium that is capable of storing or encoding a set of instructions for execution by the machine and that cause the machine to perform any one or more of the methodologies of the present presently disclosed subject matter. the term "machine-readable storage medium" shall accordingly be taken to include, but not limited to, solid-state memories, and optical and magnetic media.

It is to be further noted that the system 100 may also include, for example, a video display unit (e.g., flat panel display, such as OLED, or liquid crystal display (LCD) or a cathode ray tube (CRT)), an alphanumeric input device (e.g., a keyboard), a cursor control device (e.g., a mouse), a signal generation device (e.g., a speaker), and the like.

It is to be further noted that the system for three-dimensional (3D) printing 100 may have a top-down orientation or any other orientation capable of performing sequence of operations of the presently disclosed subject matter, mutatis mutandis.

Turning to **Fig. 2****,** there is shown a flowchart illustrating one example of a sequence of operations carried out for three-dimensional (3D) printing, in accordance with the presently disclosed subject matter.

Accordingly, the system for three-dimensional (3D) printing 100 can be configured to perform a three-dimensional (3D) printing process 200, e.g., utilizing a printing control module 116.

For this purpose, system 100 obtains a 3D model for printing (block 202). The system 100 divides the obtained 3D model into a plurality of horizontal layers such that each horizontal layer of the plurality of horizontal layers represents a cross-section (e.g., surface geometry) of the 3D model to be printed. Of the plurality of horizontal layers, at least one horizontal layer includes one or more clusters, which are closed geometric shapes consisting of a plurality of pixels (block 204). The one or more clusters may have any geometric shape known in the art, for example, a ring shape, a round shape, a triangle shape, a square shape, and the like, and can be part of a pattern, corresponding to the cross-section (e.g., surface geometry) of the 3D model. The pattern may include regions configured to be fully or partially printed by the system 100 (e.g., the one or more clusters), as well as regions configured not to be printed at all.

By way of a non-limiting example, system 100 obtains a 3D model 300 consisting of a plurality of square-shaped layers 302. Each square-shaped layer 302, as illustrated in Fig. 3A, includes a pattern including four clusters: (a) a circle-shaped cluster 304, (b) a curved-shape cluster 306, (c) a square-shaped cluster 308 consisting of 25 circle-shaped clusters 310 arranged in a 5x5 configuration, and (d) a ring-shaped cluster 312 surrounding all three aforementioned clusters (i.e., the circle-shaped cluster 304, the curved-shape cluster 306, and the square-shaped cluster 308).

Returning to the flowchart, for each given horizontal layer of the at least one horizontal layer including one or more clusters (block 206), system 100 detects the one or more clusters (block 208) by, for example, determining a positioning of each given cluster of the one or more clusters within the given horizontal layer. The detected one or more clusters are then each categorized according to a predefined set of cluster-related categories, giving rise to one or more categorized clusters (block 210). The predefined set of cluster-related categories can include, for example, categories such as a "fit and lonely" cluster, a "fit with neighbors" cluster, a "fit and rare" cluster, a "big and lonely" cluster, and a "big with neighbors" cluster, which will be further explained in detail hereafter.

Based on the categorization of the detected one or more clusters, system 100 determines one or more overlay bounding zones, each configured to contain at least one given categorized cluster of the one or more categorized clusters (block 212), and divides at least an area of each of the one or more overlay bounding zones consisting the at least one given categorized cluster into one or more overlay regions arranged in one or more overlay rows (block 214). The one or more overlay regions are areas that the movable projector 102 is capable of individually projecting in a single emission of light, and at least some of these regions include at least a portion of the at least one given categorized cluster.

In accordance with the example above, as seen in Figs. 3B-1 to 3D-1, the circle-shaped cluster 304 and the curved-shape cluster 306 are each contained by a respective square-shaped bounding zone (bounding zones 314 and 316, respectively), whereas the square-shaped cluster 308 and the ring-shaped cluster 312 are contained by the same square-shaped bounding zone, bounding zone 318. Each of square-shaped bounding zones 314, 316, and 318 is divided into one or more overlay regions 320 such that the square-shaped bounding zone 314 is divided into a single overly region 320 arranged in a single row, the square-shaped bounding zone 316 is divided into four overly regions 320 arranged in two rows, and the square-shaped bounding zone 318 is divided into 77 overly regions 320 arranged in eleven rows (seen in Figs 3B-2 to 3D-2).

Returning to the flowchart, in each of the one or more overlay bounding zones, system 100 then shifts at least one overlay row of the one or more overlay rows, if necessary, so as to position at least a portion of at least one segment of a first overlay region of each of the at least one overlay row to be at a predetermined distance from at least a portion of the at least one given categorized cluster (block 216).

In accordance with the example above, as seen in Figs 4A-1 and 4B-1, the second row of the two rows of the square-shaped bounding zone 316 is shifted to the right so that a portion of its first overly region be at zero distance from the left side of the curved-shape cluster 306. Similarly, the first three rows and the last five rows of the eleven rows of the square-shaped bounding zone 318 are shifted to the right so that a portion of their first overly region be at zero distance from the left side of the ring-shaped cluster 312. The shifting step was not made for the square-shaped bounding zone 314 containing the circle-shaped cluster 304, since, as seen in Fig. 3B-2, a portion of the first overly region is already at zero distance from the circle-shaped cluster 304.

Returning to the flowchart, once the shifting is completed, system 100 removes from each of the one or more overlay bounding zones, overlay regions of the one or more overlay regions that do not contain at least a portion of the at least one given categorized cluster (block 218).

In accordance with the example above, as seen in Figs 4A-2 and 4B-2, the overly regions 320 which did not contain at least a portion of the curved-shape cluster 306 or at least a portion of the square-shaped cluster 308 and ring-shaped cluster 312 have been removed.

In some cases, demonstrated in relation to Fig. 5, the step of removing overlay regions that do not contain at least a portion of the at least one given categorized cluster (block 218) give rise to one or more overlay sub-rows consisting of one or more of the remaining overlay regions (block 220). In such cases, the system 100 can shift at least one overlay sub-row of the one or more overlay sub-rows, if necessary, such that at least a portion of at least one segment of a first overlay region of each of the one or more overlay sub-rows is found to be at a predetermined distance from at least a portion of the at least one given categorized cluster (block 222). Once the shifting is completed, system 100 removes overlay regions of the one or more remaining overlay regions that do not contain at least a portion of the at least one given categorized cluster (block 224).

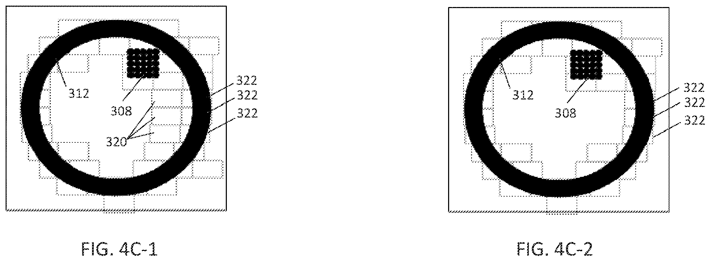

In accordance with the example above, as seen in Fig. 4B-2, the removal of the overlay regions 320, which did not contain at least a portion of the ring-shaped cluster 312 or the square-shaped cluster 308 from the square-shaped bounding zone 318, give rise to three sub-rows 322. Sub-rows 322 are shifted to the right such that at least a portion of at least one segment of a first overlay region of each of sub-rows 322 is found to be at zero distance from at least a portion of the ring-shaped cluster 312 (Fig. 4C-1). Once shifted, overlay regions of sub-rows 322 that do not contain at least a portion of the ring-shaped cluster 312 are removed (Fig. 4C-2).

It is to be noted that the above-mentioned shifting and removing steps can be repeated so long as there are overlay regions 320 not containing at least a portion of the at least one given categorized cluster. It is to be further noted that the shifting of the rows and sub-rows, described therebefore, can be made towards other directions and not necessarily only to the right.

With the completion of the removal of the one or more regions that do not contain at least a portion of the at least one given categorized cluster, system 100 determines from the remaining overlay regions of the one or more overlay regions of each of the at least an area of the overlay bounding zone consisting the at least one given categorized cluster a projection trajectory for the movable projector 102 to operate accordingly in order to fully print the one or more categorized clusters (block 226).

In accordance with the example above, as seen in Fig 4D, system 100 determines from the remaining overlay regions of each of overlay bounding zones 314, 316, and 318 (see e.g., FIG.s 3B-1, 3C-1, 3D-1), a projection trajectory for the moveable projector 102 to operate accordingly in order to fully print the circle-shaped cluster 304, the curved-shape cluster 306, the square-shaped cluster 308, and the ring-shaped cluster 112 of the square-shaped layer 302. The projection trajectory consists of only overlay regions 320 that contain at least a portion of at least one of the circle-shaped cluster 304, the curved-shape cluster 306, the square-shaped cluster 308, or the ring-shaped cluster 112.

In some cases, the projection trajectory can be determined, for example, based on an algorithm directed for solving the Travelling Salesman Problem (TSP), whereby the "City" can be overlay regions 320, the circle-shaped cluster 304, the curved-shape cluster 306, the square-shaped cluster 308, the ring-shaped cluster 112, or a combination comprising the foregoing.

Once the projection trajectory (path) is determined, system 100 operates the movable projector according to the projection trajectory, such that the moveable projector 102 emits light on each overlay region associated with the projection trajectory (block 228).

With the completion of the projection trajectory on the given horizontal layer, system 100 moves the building platform 108 to enable printing of a subsequent horizontal layer of the plurality of horizontal layers (block 230).

Returning to the categorization of the detected one or more clusters, in order to categorize a given cluster of the one or more clusters according to the predefined set of cluster-related categories, system 100 involves at least one of: (a) determining whether the given cluster of the one or more clusters fully matches the size of an overlay region or is fully fitted within an overlay region, and (b) determining whether at least one cluster of the one or more clusters is located at a distance that is less than an overlay region's length or an overlay region's width from the given cluster.

In cases where (a) the given cluster is fully fitted within an overlay region of the plurality of overlay regions of the at least an area of the overlay bounding zone consisting the given categorized cluster, and (b) there are no other clusters of the one or more clusters located at a distance that is less than an overlay region's length or an overlay region's width from the given cluster, the given cluster is categorized as a "fit and lonely" cluster. In such cases, the "fit and lonely" cluster is fully printed using a single region projection of the overlay region of the plurality of overlay regions containing the "fit and lonely" cluster. For example, as seen in Figs. 3A and 3B-2, the circle-shaped cluster 304 is suited to be categorized as a "fit and lonely" cluster as it is fully fitted within an overlay region 320 and there are no other clusters of the one or more clusters (i.e., curved-shape cluster 306, square-shaped cluster 308, or any of the circle-shaped clusters 310 arranged in a 5x5 configuration, assembling the square-shaped cluster 308) located at a distance that is less than an overlay region's length or an overlay region's width from it.

In cases where (a) the given cluster is fully fitted within an overlay region of the plurality of overlay regions of the at least an area of the overlay bounding zone consisting the given categorized cluster, and (b) at least one other cluster of the one or more clusters is located at a distance that is less than an overlay region's length or an overlay region's width from the given cluster, the given cluster is categorized as a "fit with neighbors" cluster. In such cases, the "fit with neighbors" cluster is appended to be within the same overlay region of the plurality of overlay regions as the at least one other cluster of the one or more clusters that is located at a distance less than an overlay region's length or an overlay region's width from the given cluster. The "fit with neighbors" cluster and the other cluster of the one or more clusters located at a distance that is less than an overlay region's length or an overlay region's width are printed using a single region projection of the overlay region of the plurality of overlay regions containing both the "fit with neighbors" cluster and the other cluster. For example, as seen in Figs. 3A and 3D-2, circle-shaped clusters of the circle-shaped clusters 310 arranged in a 5x5 configuration are suited to be categorized as "fit with neighbors" clusters as each given circle-shaped cluster 310 is fully fitted within an overlay region of the plurality of overlay regions, and at least one other circle-shaped cluster of circle-shaped clusters 310 is found to be at a distance that is less than an overlay region's length or an overlay region's width from the given circle-shaped cluster 310.

In cases where the given cluster is fully fitted and fully matches the size of an overlay region of the plurality of overlay regions of the at least an area of the overlay bounding zone consisting the given categorized cluster, the given cluster is categorized as a "fit and rare" cluster. In such cases, the "fit and rare" cluster is printed using a single region projection of the overlay region of the plurality of overlay regions containing the "fit and rare" cluster. For example, a rectangle-shaped cluster with dimensions that are identical to a single overlay region's dimensions will be categorized as a "fit and rare" cluster (not shown).

In cases where (a) the given cluster fully matches the size of an overlay region of the plurality of overlay regions of the at least an area of the overlay bounding zone consisting the given categorized cluster, (b) the given cluster is not fully fitted within the overlay region, and (c) there are no other clusters of the one or more clusters located at a distance that is less than an overlay region's length or an overlay region's width from the given cluster, the given cluster is categorized as a "big and lonely" cluster. In such cases, the "big and lonely" cluster is fully printed by dividing the "big and lonely" cluster into a plurality of overlay regions and projecting each of the plurality of overlay regions using a single region projection. For example, as seen in Figs. 3A and 3C-2, the curved-shaped cluster 306 is suited to be categorized as a "big and lonely" cluster as it fully matches the size of an overlay region 320, it is not fully fitted within the overlay region 320, and there are no other clusters of the one or more clusters (i.e., circle-shape cluster 304, square-shaped cluster 308, or any of the circle-shape clusters 310 arranged in a 5x5 configuration, assembling the square-shaped cluster 308) located at a distance that is less than an overlay region's length or an overlay region's width from it.

In cases where (a) the given cluster fully matches the size of an overlay region of the plurality of overlay regions of the at least an area of the overlay bounding zone consisting the given categorized cluster, (b) the given cluster is not fully fitted within the overlay region, and (c) there are other clusters of the one or more clusters located at a distance that is less than an overlay region's length or an overlay region's width from the given cluster, the given cluster is categorized as a "big with neighbors" cluster. In such cases, at least a portion of the "big with neighbors" cluster is appended to the same overlay region of the plurality of overlay regions as another cluster of the one or more clusters located at a distance that is less than an overlay region's length or an overlay region's width from it. For example, as seen in Figs. 3A and 3D-2, the ring-shaped cluster 112 is suited to be categorized as a "big with neighbors" cluster as it fully matches the size of an overlay region 320, it is not fully fitted within the overlay region 320, and it has other clusters of the one or more clusters (e.g., the three circles 310 found on the right side of the first row of the square-shaped cluster 308) located at a distance that is less than an overlay region's length or an overlay region's width from at least a portion of it.

It is to be noted, with reference to **Figs. 2** **and** **5****,** that some of the blocks can be integrated into a consolidated block or can be broken down to a few blocks and/or other blocks may be added. It is to be further noted that some of the blocks are optional. It should be also noted that whilst the flow diagram is described also with reference to the system elements that realizes them, this is by no means binding, and the blocks can be performed by elements other than those described herein.

It is to be understood that the presently disclosed subject matter is not limited in its application to the details set forth in the description contained herein or illustrated in the drawings. The presently disclosed subject matter is capable of other embodiments and of being practiced and carried out in various ways. Hence, it is to be understood that the phraseology and terminology employed herein are for the purpose of description and should not be regarded as limiting. As such, those skilled in the art will appreciate that the conception upon which this disclosure is based may readily be utilized as a basis for designing other structures, methods, and systems for carrying out the several purposes of the present presently disclosed subject matter.

It will also be understood that the system according to the presently disclosed subject matter can be implemented, at least partly, as a suitably programmed computer. Likewise, the presently disclosed subject matter contemplates a computer program being readable by a computer for executing the disclosed method. The presently disclosed subject matter further contemplates a machine-readable memory tangibly embodying a program of instructions executable by the machine for executing the disclosed method.

## Claims

1. A three-dimensional,3D, printing system (100) comprising:
a movable projector (102) capable of moving on a two-dimensional,2D, plane;
a container (140) capable of containing a photosensitive liquid material (106) directed to solidify in response to an encounter with an emitted light generated by the moveable projector;
a building platform (108) directed to be movable perpendicularly to the 2D plane within the container; and,
a processing circuitry configured to:
obtain a 3D model for printing;
divide the 3D model into a plurality of horizontal layers, wherein: (a) at least one of the plurality of horizontal layers includes one or more clusters, and (b) each of the one or more clusters is a closed geometric shape consisting of a plurality of pixels;
for each given horizontal layer of the at least one of the plurality of horizontal layers, perform the following:
detect the one or more clusters within the given horizontal layer;
categorize each of the one or more clusters according to a predefined set of cluster-related categories, giving rise to one or more categorized clusters;
for at least one of the one or more categorized clusters perform the following:
determine an overlay bounding zone configured to contain the at least one given categorized cluster;
divide at least an area of the overlay bounding zone consisting the at least one given categorized cluster into one or more overlay regions arranged in one or more overlay rows such that at least some of the one or more overlay regions include at least a portion of the at least one given categorized cluster and each overlay region of the plurality of overlay regions is an area which the movable projector is capable of projecting in a single emission of light;
shift at least one overlay row of the one or more overlay rows, if necessary, such that at least a portion of at least one segment of a first overlay region of each of the at least one overlay row is found to be at a predetermined distance from at least a portion of the at least one given categorized cluster; and,
remove overlay regions of the one or more regions that do not contain at least a portion of the at least one given categorized cluster;
determine from the remaining overlay regions of the one or more overlay regions of each of the at least an area of the overlay bounding zone consisting the at least one given categorized cluster a projection trajectory for the movable projector to operate accordingly in order to fully print the one or more categorized clusters;
operate the movable projector according to the projection trajectory, such that the moveable projector emits light on each overlay region associated with the projection trajectory; and,
with the completion of the projection trajectory on the given horizontal layer, move the building platform to enable printing of a subsequent horizontal layer of the plurality of horizontal layers.

2. The three-dimensional,3D, printing system (100) of claim 1, wherein the step of removing overlay regions that do not contain at least a portion of the at least one given categorized cluster give rise to one or more overlay sub-rows consisting of one or more of the remaining overlay regions, and wherein the system is further configured to:
shift at least one overlay sub-row of the one or more overlay sub-rows, if necessary, such that at least a portion of at least one segment of a first overlay region of each of the one or more overlay sub-rows is found to be at a predetermined distance from at least a portion of the at least one given categorized cluster; and,
remove overlay regions of the one or more remaining overlay regions that do not contain at least a portion of the at least one given categorized cluster.

3. The three-dimensional,3D, printing system (100) of claim 1, wherein the determination of the projection pattern is preformed based on an algorithm directed for solving the Travelling Salesman Problem.

4. The three-dimensional,3D, printing system (100) of claim 1, wherein the area of the overlay bounding zone consisting the at least one given categorized cluster includes overlay regions that do not need to be projected in order to fully print said cluster.

5. The three-dimensional,3D, printing system (100) of claim 1, wherein the detection of the one or more clusters involves determining a positioning of a given cluster of the one or more clusters within the given horizontal layer.

6. The three-dimensional,3D, printing system (100) of claim 5, wherein the categorization of the one or more clusters involves at least one of: (a) determining whether the given cluster of the one or more clusters fully matches the size of an overlay region or is fully fitted within an overlay region, and (b) determining whether at least one cluster of the one or more other clusters, excluding the given cluster, is located at a distance that is less than an overlay region's length or an overlay region's width from the given cluster.

7. The three-dimensional,3D, printing system (100) of claim 6, wherein at least one cluster of the one or more clusters is considered to be a "fit and lonely" cluster if: (a) said at least one cluster is fully fitted within an overlay region of the plurality of overlay regions of said at least an area of the overlay bounding zone consisting the given categorized cluster, and (b) there are no other clusters of the one or more other clusters located at a distance that is less than an overlay region's length or an overlay region's width from said at least one cluster.

8. The three-dimensional,3D, printing system (100) of claim 7, wherein said "fit and lonely" cluster is fully printed using a single region projection of said overlay region of the plurality of overlay regions containing said "fit and lonely" cluster.

9. The three-dimensional,3D, printing system (100) of claim 6, wherein at least one cluster of the one or more clusters is considered to be a "fit with neighbors" cluster if: (a) said at least one cluster is fully fitted within an overlay region of the plurality of overlay regions of said at least an area of the overlay bounding zone consisting the given categorized cluster, and (b) at least one cluster of the one or more other clusters is located at a distance that is less than an overlay region's length or an overlay region's width from said at least one cluster.

10. The three-dimensional,3D, printing system (100) of claim 9, wherein said "fit with neighbors" cluster is appended to be within the same overlay region of the plurality of overlay regions as another cluster of the one or more other clusters located at a distance that is less than an overlay region's length or an overlay region's width from said at least one cluster.

11. The three-dimensional,3D, printing system (100) of claim 10, wherein said "fit with neighbors" cluster and said another cluster of the one or more clusters located at a distance that is less than an overlay region's length or an overlay region's width from said at least one cluster are printed using a single region projection of said overlay region of the plurality of overlay regions containing both said "fit and lonely" cluster and said another cluster.

12. The three-dimensional,3D, printing system of claim 6, wherein at least one cluster of the one or more clusters is considered to be a "fit and rare" cluster if said at least one cluster is fully fitted and fully matches the size of an overlay region of the plurality of overlay regions of said at least an area of the overlay bounding zone consisting the given categorized cluster.

13. The three-dimensional,3D, printing system (100) of claim 12, wherein said "fit and rare" cluster is printed using a single region projection of said overlay region of the plurality of overlay regions containing said "fit and rare" cluster.

14. The three-dimensional,3D, printing system (100) of claim 6, wherein at least one cluster of the one or more clusters is considered to be a "big and lonely" cluster if: (a) said at least one cluster fully matches the size of an overlay region of the plurality of overlay regions of said at least an area of the overlay bounding zone consisting the given categorized cluster, (b) said at least one cluster is not fully fitted within said overlay region, and (c) there are no other clusters of the one or more other clusters located at a distance that is less than an overlay region's length or an overlay region's width from said at least one cluster.

15. The three-dimensional,3D, printing system (100) of claim 14, wherein said "big and lonely" cluster is fully printed by dividing said "big and lonely" to a plurality of overlay regions and projecting each of said plurality of overlay regions using a single region projection.

16. The three-dimensional,3D, printing system (100) of claim 6, wherein at least one cluster of the one or more clusters is considered to be a "big with neighbors" cluster if: (a) said at least one cluster fully matches the size of an overlay region of the plurality of overlay regions of said at least an area of the overlay bounding zone consisting the given categorized cluster, (b) said at least one cluster is not fully fitted within said overlay region, and (c) there are clusters of the one or more other clusters located at a distance that is less than an overlay region's length or an overlay region's width from said at least one cluster.

17. The three-dimensional,3D, printing system (100) of claim 16, wherein at least a portion of said "big with neighbors" cluster is appended to the same overlay region of the plurality of overlay regions as another cluster of the one or more other clusters located at a distance that is less than an overlay region's length or an overlay region's width from said at least one cluster.

18. The three-dimensional,3D, printing system (100) of claim 17, wherein said at least a portion of said "big with neighbors" cluster and said another cluster of the one or more other clusters located at a distance that is less than an overlay region's length or an overlay region's width from said at least one cluster are printed using a single region projection of said overlay region of the plurality of overlay regions containing both said at least a portion of said "big with neighbors" cluster and said another cluster.

19. The three-dimensional,3D, printing system (100) of claim 1, wherein the projector (102) is a Digital Light Processing,DLP, projector.

20. The three-dimensional,3D, printing system (100) of claim 1, wherein the projector (102) is a laser.

21. A method (200) for three-dimensional,3D, printing comprising:
obtaining (202) a 3D model for printing;
dividing (204) the 3D model into a plurality of horizontal layers, wherein: (a) at least one of the plurality of horizontal layers includes one or more clusters,
and (b) each of the one or more clusters is a closed geometric shape consisting of a plurality of pixels;
for each given horizontal layer of the at least one of the plurality of horizontal layers, performing the following:
detecting (208) the one or more clusters within the given horizontal layer;
categorizing (210) each of the one or more clusters according to a predefined set of cluster-related categories, giving rise to one or more categorized clusters;
for at least one of the one or more categorized clusters performing the following:
determining (212) an overlay bounding zone configured to contain the at least one given categorized cluster;
dividing (214) at least an area of the overlay bounding zone consisting the at least one given categorized cluster into one or more overlay regions arranged in one or more overlay rows such that at least some of the one or more overlay regions include at least a portion of the at least one given categorized cluster and each overlay region of the plurality of overlay regions is an area which the movable projector is capable of projecting in a single emission of light;
shifting (216) at least one overlay row of the one or more overlay rows, if necessary, such that at least a portion of at least one segment of a first overlay region of each of the at least one overlay row is found to be at a predetermined distance from at least a portion of the at least one given categorized cluster; and,
removing (218) overlay regions of the one or more regions that do not contain at least a portion of the at least one given categorized cluster;
determining (226) from the remaining overlay regions of the one or more overlay regions of each of the at least an area of the overlay bounding zone consisting the at least one given categorized cluster a projection trajectory for the movable projector to operate accordingly in order to fully print the one or more categorized clusters;
operating (228) the movable projector according to the projection trajectory, such that the moveable projector emits light on each overlay region associated with the projection trajectory; and,
with the completion of the projection trajectory on the given horizontal layer, moving the building platform to enable printing of a subsequent horizontal layer of the plurality of horizontal layers.

22. The method (200), for three-dimensional,3D, printing of claim 21, wherein the step of removing overlay regions that do not contain at least a portion of the at least one given categorized cluster give rise to one or more overlay sub-rows consisting of one or more of the remaining overlay regions, and wherein the method is further configured to:
shifting at least one overlay sub-row of the one or more overlay sub-rows, if necessary, such that at least a portion of at least one segment of a first overlay region of each of the one or more overlay sub-rows is found to be at a predetermined distance from at least a portion of the at least one given categorized cluster; and,
removing overlay regions of the one or more remaining overlay regions that do not contain at least a portion of the at least one given categorized cluster.

23. The method (200) for three-dimensional,3D, printing of claim 21, wherein the determination of the projection pattern is preformed based on an algorithm directed for solving the Travelling Salesman Problem.

24. The method (200) for three-dimensional,3D, printing of claim 21, wherein the area of the overlay bounding zone consisting the at least one given categorized cluster includes overlay regions that do not need to be projected in order to fully print said cluster.

25. The method (200) for three-dimensional,3D, printing of claim 21, wherein the detection of the one or more clusters involves determining a positioning of a given cluster of the one or more clusters within the given horizontal layer.

26. The method (200) for three-dimensional,3D, printing of claim 25, wherein the categorization of the one or more clusters involves at least one of: (a) determining whether the given cluster of the one or more clusters fully matches the size of an overlay region or is fully fitted within an overlay region, and (b) determining whether at least one cluster of the one or more other clusters, excluding the given cluster, is located at a distance that is less than an overlay region's length or an overlay region's width from the given cluster.

27. The method (200) for three-dimensional,3D, printing of claim 26, wherein at least one cluster of the one or more clusters is considered to be a "fit and lonely" cluster if: (a) said at least one cluster is fully fitted within an overlay region of the plurality of overlay regions of said at least an area of the overlay bounding zone consisting the given categorized cluster, and (b) there are no other clusters of the one or more other clusters located at a distance that is less than an overlay region's length or an overlay region's width from said at least one cluster.

28. The method (200) for three-dimensional,3D, printing of claim 27, wherein said "fit and lonely" cluster is fully printed using a single region projection of said overlay region of the plurality of overlay regions containing said "fit and lonely" cluster.

29. The method (200) for three-dimensional,3D, printing of claim 26, wherein at least one cluster of the one or more clusters is considered to be a "fit with neighbors" cluster if: (a) said at least one cluster is fully fitted within an overlay region of the plurality of overlay regions of said at least an area of the overlay bounding zone consisting the given categorized cluster, and (b) at least one cluster of the one or more other clusters is located at a distance that is less than an overlay region's length or an overlay region's width from said at least one cluster.

30. The method (200) for three-dimensional,3D, printing of claim 29, wherein said "fit with neighbors" cluster is appended to be within the same overlay region of the plurality of overlay regions as another cluster of the one or more other clusters located at a distance that is less than an overlay region's length or an overlay region's width from said at least one cluster.

31. The method (200) for three-dimensional,3D, printing of claim 30, wherein said "fit with neighbors" cluster and said another cluster of the one or more clusters located at a distance that is less than an overlay region's length or an overlay region's width from said at least one cluster are printed using a single region projection of said overlay region of the plurality of overlay regions containing both said "fit and lonely" cluster and said another cluster.

32. The method (200) for three-dimensional,3D, printing of claim 26, wherein at least one cluster of the one or more clusters is considered to be a "fit and rare" cluster if said at least one cluster is fully fitted and fully matches the size of an overlay region of the plurality of overlay regions of said at least an area of the overlay bounding zone consisting the given categorized cluster.

33. The method (200) for three-dimensional,3D, printing of claim 32, wherein said "fit and rare" cluster is printed using a single region projection of said overlay region of the plurality of overlay regions containing said "fit and rare" cluster.

34. The method (200) for three-dimensional,3D, printing of claim 26, wherein at least one cluster of the one or more clusters is considered to be a "big and lonely" cluster if: (a) said at least one cluster fully matches the size of an overlay region of the plurality of overlay regions of said at least an area of the overlay bounding zone consisting the given categorized cluster, (b) said at least one cluster is not fully fitted within said overlay region, and (c) there are no other clusters of the one or more other clusters located at a distance that is less than an overlay region's length or an overlay region's width from said at least one cluster.

35. The method (200) for three-dimensional,3D, printing of claim 34, wherein said "big and lonely" cluster is fully printed by dividing said "big and lonely" to a plurality of overlay regions and projecting each of said plurality of overlay regions using a single region projection.

36. The method (200) for three-dimensional,3D, printing of claim 26, wherein at least one cluster of the one or more clusters is considered to be a "big with neighbors" cluster if: (a) said at least one cluster fully matches the size of an overlay region of the plurality of overlay regions of said at least an area of the overlay bounding zone consisting the given categorized cluster, (b) said at least one cluster is not fully fitted within said overlay region, and (c) there are clusters of the one or more other clusters located at a distance that is less than an overlay region's length or an overlay region's width from said at least one cluster.

37. The method (200) for three-dimensional,3D, printing of claim 36, wherein at least a portion of said "big with neighbors" cluster is appended to the same overlay region of the plurality of overlay regions as another cluster of the one or more other clusters located at a distance that is less than an overlay region's length or an overlay region's width from said at least one cluster.

38. The method (200) for three-dimensional,3D, printing of claim 37, wherein said at least a portion of said "big with neighbors" cluster and said another cluster of the one or more other clusters located at a distance that is less than an overlay region's length or an overlay region's width from said at least one cluster are printed using a single region projection of said overlay region of the plurality of overlay regions containing both said at least a portion of said "big with neighbors" cluster and said another cluster.

39. The method (200) for three-dimensional,3D, printing of claim 21, wherein the projector (102) is a Digital Light Processing,DLP, projector.

40. The method (200) for three-dimensional,3D, printing of claim 21, wherein the projector (102) is a laser.

41. A non-transitory computer readable storage medium having computer readable program code embodied therewith, the computer readable program code, executable by at least one processor to perform a method (200) for three-dimensional,3D, printing, the three-dimensional,3D, printing comprising one or more components, the method comprising:
obtaining (202) a 3D model for printing;
dividing (204) the 3D model into a plurality of horizontal layers, wherein: (a) at least one of the plurality of horizontal layers includes one or more clusters, and (b) each of the one or more clusters is a closed geometric shape consisting of a plurality of pixels;
for each given horizontal layer of the at least one of the plurality of horizontal layers, performing the following:
detecting (208) the one or more clusters within the given horizontal layer;
categorizing (210) each of the one or more clusters according to a predefined set of cluster-related categories, giving rise to one or more categorized clusters;
for at least one of the one or more categorized clusters performing the following:
determining (212) an overlay bounding zone configured to contain the at least one given categorized cluster;
dividing (214) at least an area of the overlay bounding zone consisting the at least one given categorized cluster into one or more overlay regions arranged in one or more overlay rows such that at least some of the one or more overlay regions include at least a portion of the at least one given categorized cluster and each overlay region of the plurality of overlay regions is an area which the movable projector is capable of projecting in a single emission of light;
shifting (216) at least one overlay row of the one or more overlay rows, if necessary, such that at least a portion of at least one segment of a first overlay region of each of the at least one overlay row is found to be at a predetermined distance from at least a portion of the at least one given categorized cluster; and,
removing (218) overlay regions of the one or more regions that do not contain at least a portion of the at least one given categorized cluster;
determining (226) from the remaining overlay regions of the one or more overlay regions of each of the at least an area of the overlay bounding zone consisting the at least one given categorized cluster a projection trajectory for the movable projector to operate accordingly in order to fully print the one or more categorized clusters;
operating (228) the movable projector according to the projection trajectory, such that the moveable projector emits light on each overlay region associated with the projection trajectory; and,
with the completion of the projection trajectory on the given horizontal layer, moving the building platform to enable printing of a subsequent horizontal layer of the plurality of horizontal layers.
